(19) Europäisches Patentamt
European Patent Office
Office européen des brevets

(11) **EP 2 517 152 B1**

(12) **FASCICULE DE BREVET EUROPEEN**

(45) Date de publication et mention de la délivrance du brevet:
**21.01.2015 Bulletin 2015/04**

(51) Int Cl.:
***G06K 9/62*** *(2006.01)*

(21) Numéro de dépôt: **10798992.3**

(22) Date de dépôt: **08.12.2010**

(86) Numéro de dépôt international:
**PCT/EP2010/069116**

(87) Numéro de publication internationale:
**WO 2011/076563 (30.06.2011 Gazette 2011/26)**

(54) **PROCEDE DE CLASSIFICATION D'OBJETS DANS UN SYSTEME DE VEILLE PAR IMAGERIE**

VERFAHREN ZUR OBJECKTKLASSIFIZIERUNG IN EINEM BILDBEOBACHTUNGSSYSTEM

METHOD OF OBJECT CLASSIFICATION IN AN IMAGE OBSERVATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2009 FR 0906294**

(43) Date de publication de la demande:
**31.10.2012 Bulletin 2012/44**

(73) Titulaire: **Thales**
**92200 Neuilly Sur Seine (FR)**

(72) Inventeurs:
• **FOURNIER, Jérôme**
**F-78180 Montigny le Bretonneux (FR)**
• **SIMON, Alain**
**F-78490 Les Mesnuls (FR)**
• **PAYOT, Etienne**
**F-78960 Voisins-le-Bretonneux (FR)**
• **HENAFF, Gilles**
**78000 Versailees (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A1- 2008 095 435**

• **FORMAN A V ET AL: "Contextual analysis of tactical scenes" PROCEEDINGS OF THE INTERNATIONAL SOCIETY FOR OPTICAL ENGINEERING (SPIE), SPIE, USA, vol. 845, 1 janvier 1984 (1984-01-01), pages 189-197, XP008125810 ISSN: 0277-786X**
• **TORRALBA A.: "Contextual Priming for Object Detection" INTERNATIONAL JOURNAL OF COMPUTER VISION, vol. 53, no. 2, 2003, pages 169-191, XP002597601**
• **DURIEUX L., BARALDI A., SIMONETTI D., CONCHEDDA G.: "Object-based land cover classification using a preliminary stratified semantic pixel labeling obtained from a fuzzy spectral prior knowledge classifier" ANAIS XIV SIMPOSIO BRASILEIRO DE SENSORIAMENTO REMOTO, 23 avril 2009 (2009-04-23), - 25 avril 2009 (2009-04-25) pages 137-143, XP002597602 Natal, Brasil**
• **HEITZ G. AND KOLLER D.: "Learning Spatial Context: Using stuff to find things" PROCEEDINGS OF THE 10TH ECCV, PART I - FORSYTH D., TORR P. AND ZISSERMAN A. (EDS) - LCNS 5320 (SPRINGER) - PAGES 30-43, 2008, XP002597603**
• **BACHMANN A. AND BALTHASAR M.: "Context-Aware Object Priors" INTERNATIONAL CONFERENCE ON INTELLIGENT ROBOTIC SYSTEMS - IROS 2008 - 2CD WORKSHO: PLANNING, PERCEPTION AND NAVIGATION FOR INTELLIGENT VEHICLES, 22 septembre 2008 (2008-09-22), - 26 septembre 2008 (2008-09-26) XP002597604 Nice, France**

## Description

Le domaine de l'invention est celui de la classification d'objets dans les systèmes de veille par imagerie.

Le problème posé dans cette application est celui de la discrimination entre différents objets. La variété des objets et des fonds présents dans les scènes naturelles traitées est très importante et il est complexe de discerner les objets, d'autant plus que leur distance et éventuellement leur vitesse radiale lorsque ces objets sont mobiles, ne sont pas connues avec des acquisitions réalisées en imagerie passive. Par exemple, à longue distance, les bateaux peuvent être très ressemblants (vitesses radiales proches, mouvement quasi-rectiligne uniforme, niveaux d'intensité proches, etc.) à des avions. Par ailleurs, les objets d'intérêt doivent potentiellement être traités à grande distance ce qui augure de faibles résolutions et donc d'une information qui n'est pas nécessairement très riche en vue de prendre une décision de classification. En outre, les conditions de prise de vue (conditions météo, conditions jour/nuit, reflets, éblouissement, ...) modifient le signal sur ces objets, compliquant davantage la tâche de discrimination.

Les techniques de classification fonctionnent en représentant les objets par un ensemble de caractéristiques (vitesse, SNR, intensité, signatures de forme ...). Celles-ci définissent un ou plusieurs espaces de caractéristiques multidimensionnels dans lesquels se projettent les caractéristiques extraites des objets, formant ainsi des « nuages de points » ou classes dont il s'agit de trouver les frontières. Ces frontières sont « apprises » en se basant sur un ensemble d'objets de référence aussi appelé ensemble d'apprentissage, dont nous connaissons le type réel (c'est-à-dire que la nature des classes est connue a priori et sans ambiguïté). Meilleures sont les caractéristiques et plus les nuages de points formés par les différentes classes d'intérêt sont séparés et plus discriminantes sont les frontières trouvées. De même, plus la variété des objets est grande et plus le nombre de classes est important et plus il est complexe de bien les caractériser et donc de les discriminer. Les règles permettant de décider de l'appartenance ou non d'un objet à une classe, sont issues de l'apprentissage.

On appelle classifieur (ou expert), un programme informatique dont le rôle est de décider à quelle classe appartient un nouvel objet fourni en entrée, en fonction des informations apprises. La classe d'appartenance est déterminée par application des règles de décision (autrement appelées base de connaissances) qui ont elles mêmes été préalablement apprises sur les données d'apprentissage.

La classification d'un nouvel objet suppose donc que les règles de décision ont préalablement été élaborées.

On considère tout d'abord l'élaboration de cette base de connaissances. Elle est basée sur un ensemble d'exemples connus appelés prototypes. Les prototypes sont souvent représentés par des vecteurs de caractéristiques où chaque composante est une mesure faite sur les objets réels ou sur un de leurs attributs qualitatifs. Chaque caractéristique devient donc un axe dans un espace dont la dimension est égale à la cardinalité de l'ensemble des caractéristiques. Un prototype est un point projeté dans cet espace et cette série de mesures, ou l'ensemble des caractéristiques d'un prototype, forme une représentation de l'objet réel et en constitue sa signature. La difficulté ici est de trouver de "bonnes" caractéristiques qui permettent par la suite au classifieur de reconnaître facilement les différentes classes d'objets : on dit alors qu'elles sont discriminantes.

La phase d'apprentissage consiste à scinder (ou séparer) l'espace de représentation grâce à des frontières et à assigner des étiquettes de classe aux régions ainsi formées. L'élaboration de la base de connaissances (ou l'apprentissage des classifieurs) consiste donc à rechercher ces frontières de décision. La région où se trouve un vecteur de caractéristiques détermine sa classe d'appartenance.

Il existe plusieurs méthodes pour définir un certain nombre de règles indiquant l'appartenance ou non à une classe. On peut décomposer ces méthodes en deux grandes familles, l'une utilisant une approche dite structurelle et l'autre une approche statistique.

L'approche structurelle exploite la topologie des structures élémentaires des objets (la forme est décrite sous forme de structures élémentaires et de relations entre ces structures) pour définir ces règles ; par exemple, en reconnaissance syntaxique, un mot est représenté par des lettres rangées dans un ordre précis. Font ainsi partie de cette catégorie de méthodes les arbres de décision, les systèmes experts et les programmes d'analyse syntaxique.

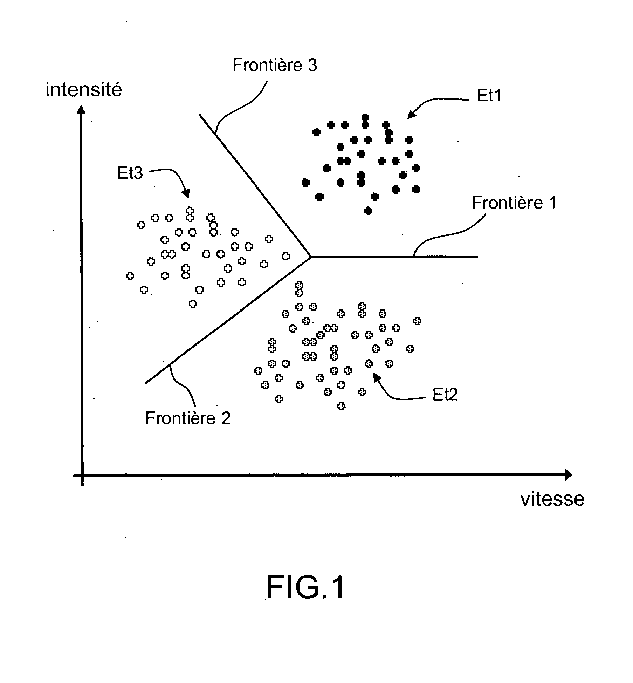

Généralement, il n'est pas possible de bâtir une partition parfaite de l'espace comme illustré dans l'exemple de la figure 1. Les trois classes d'objets respectivement étiquetées « et1 », « et2 » et « et3 », qui sont représentées à l'aide de deux caractéristiques, vitesse et intensité de l'objet, sont clairement délimitées par les trois frontières « frontière1 », « frontière2 » et « frontière3 ». Selon une approche statistique, les frontières de décision sont apprises à partir de l'ensemble (ou base) d'apprentissage censé être statistiquement représentatif de la distribution réelle des classes ; d'où le rôle majeur joué par les objets de référence de cette base. Cette approche est basée sur des caractéristiques ayant la forme d'un vecteur de valeurs numériques (généralement réelles).

La définition de ces règles d'appartenance résulte, comme on va le voir, d'un certain compromis.

Un objet ou une observation à classer (lors d'une étape ultérieure, lorsque la base de connaissances aura préalablement été établie), devient donc un point dans l'espace des caractéristiques. La connaissance de la distribution spatiale des classes permet théoriquement de catégoriser et donc de reconnaître instantanément les objets ainsi représentés. Les frontières séparant les classes dans l'espace des caractéristiques, appelées frontières de décision et qui découlent de ces règles d'appartenance, doivent donc être le résultat d'un certain compromis entre le pouvoir de généralisation et celui de mémorisation. Par généralisation, on entend la capacité d'un classifieur à reconnaître correctement des nouvelles observations, alors que la mémorisation est sa capacité à bien classer les exemples qui lui ont servi à l'apprentissage. L'apprentissage des classifieurs statistiques est donc une recherche de ces frontières de décision.

Il existe plusieurs types de caractéristiques relatifs à une description :

- locale : de nombreux algorithmes ont été proposés pour développer des descripteurs invariants aux changements d'échelle et aux transformations affines ;
- de forme : si l'information radiométrique est significative, beaucoup d'objets ou de classes d'objets se caractérisent par leur forme. Si on prend, par exemple, la classe des humains, il est impossible de se contenter des informations de niveaux de gris et il faut décrire la forme des silhouettes. Par exemple, on peut décrire cette forme à partir des dérivées spatiales 2D, des contours 2D ou même de la forme 3D.
- de texture : la description de la texture est combinée avec des algorithmes de classification non-supervisée ou de façon plus générale avec des algorithmes qui décrivent les distributions de données. Il est alors possible d'obtenir une description de texture appropriée qui est discriminante et invariante aux transformations image. L'utilisation d'une grande quantité d'images d'apprentissage permet de modéliser des textures réelles comme par exemple l'herbe et le feuillage et donc de modéliser certains types d'images, comme par exemple les scènes naturelles d'extérieur.

Les caractéristiques se basent généralement sur des mesures locales faites sur l'objet à reconnaître. Les descripteurs de texture ou les méthodes de types « bag of words » (J. Ponce, M. Hebert, C. Schmid, and A. Zisserman (eds.), Toward Category-Level Object Recognition, Springer-Verlag, Lecture Notes in Computer Science, Vol. 4170. In press) permettent une certaine prise en compte du contexte, cependant ces approches sont souvent coûteuses.

Les classes, leurs étiquettes et les règles d'appartenance à ces classes ayant été établies, on considère à présent l'étape de classification d'un nouvel objet dans une de ces classes ; il s'agit d'un problème de classification multi-classes. Un nombre élevé de classes rend ces problèmes difficiles à résoudre et engendre une complexité de calcul élevée.

Il existe des approches statistiques pour résoudre les problèmes multi-classes. Deux familles de méthodes se distinguent :

- les méthodes classiques comme les K plus proches voisins ou les réseaux de neurones qui considèrent toutes les classes à la fois ; il s'agit de méthodes multi-classes,
- les autres méthodes combinent des classifieurs binaires, avec des stratégies « un contre tous » ou « un contre un » dont des exemples sont respectivement décrits dans les publications « Duda, R., Hart, P., & Stork, D. (2000). Pattern Classification. New York, NY: Wiley-interscience » et « Hastie, T. & Tibshirani, R. (1998). "Classification by pairwise coupling," 1997 Conf. on Advances in neural information processing systems, The MIT Press, Vol. 10, 507-513".

Dans la stratégie « un contre tous », la similarité entre les différentes classes n'est pas prise en compte. Il n'y a donc pas de garantie quant à l'existence d'une discrimination entre les classes. Ceci pose un réel problème de performance du module de classification. La stratégie « un contre un » décompose exhaustivement un problème à $Q$ classes en un problème à $C_Q^2$ classes. Une telle stratégie augmente de manière importante le nombre de classes ainsi que les temps de calcul.

Afin d'améliorer la séparation des classes et la lisibilité du problème de classification, l'approche structurelle à base d'arbre de décision peut être pertinente. Toutefois, la construction de ces arbres est difficile tant au niveau du choix des attributs à utiliser pour chaque noeud de l'arbre, qu'au niveau de la profondeur de l'arbre. De plus, même si une telle structure est compréhensible pour un humain, elle ne garantit pas une bonne discrimination.

Des approches mixtes, combinant des arbres de décision et des approches statistiques, sont récemment apparues dans l'état de l'art et proposent une cascade de classifieurs boostés ; on peut citer « Viola & Jones (2001) Rapid object detection using a boosted cascade of simple features. In IEEE Computer Society Conference on Computer Vision and Pattern Recognition ». L'avantage de telles méthodes est principalement de minimiser le temps de calcul passé sur les cas simples et de consacrer l'essentiel du traitement aux cas difficiles. Ces approches sont utilisées pour des applications de classification binaires (détection de visage ou de piétons). Cependant, des travaux ont été réalisés pour étendre ces algorithmes à des problèmes de classification multi-classes. L'inconvénient majeur de ces techniques est la difficulté à comprendre et interpréter le fonctionnement de ces algorithmes.

Dans le domaine de la télédétection où l'on cherche à reconnaître la nature de la couverture naturelle de la scène observée, il existe des applications utilisant un Modèle Numérique de Terrain (ou MNT) couplé à une classification (supervisée ou non-supervisée). On cherche dans ce cas à reconnaître le type de la couverture naturelle de la scène (glacier, lac, forêt, champ,...) et non des objets d'intérêt dans la scène.

Dans le domaine de la veille par imagerie, les méthodes de classification de cibles sont peu décrites. La majorité des approches présentées se base sur des modèles d'évolution de pistage et des fonctions de croyance. Lorsque la tâche de discrimination est difficile, le compromis temps de calcul / performances est difficile à obtenir.

Le but de l'invention est de pallier à ces inconvénients.

Le principe de l'invention consiste à subdiviser le problème global de classification en différents sous-problèmes correspondant aux différents types de fonds auxquels appartiennent les objets.

Pour cela, on utilise comme nouvelle caractéristique de l'objet, le type de fond auquel il appartient, par exemple fond de mer, fond de terre, fond de ciel, ligne de crête ou ligne d'horizon. Cette information est calculée grâce à l'utilisation d'un Modèle Numérique du Terrain (MNT), de la connaissance des informations de navigation (positions géographique et attitude du capteur du système imageur) et de la direction spatiale sous lequel l'objet est vu.

Pour une zone d'intérêt centrée sur le système, on détermine dans un premier temps les élévations du terrain et on projette dans le champ de vision les lignes de côte et lignes de crête, ce qui permet de segmenter le champ de vision comme spécifié ci-dessus. On note que lorsque la plate-forme se déplace et/ou le capteur est soumis à des variations d'attitude, le champ de vision du capteur est, dans le temps, plus large que son champ de vision instantané. Le champ dans lequel le calcul est réalisé, en particulier en élévation, tient compte de ce fait.

Par le biais de cette nouvelle caractéristique, on peut positionner un objet sur un type de fond particulier et lui appliquer des règles de décision adaptées en se basant sur une connaissance spécifique de ce fond. Autrement dit, pour un type de fond particulier, la variété des objets est réduite par rapport au problème global, la caractérisation des données devient moins complexe et la discrimination devient meilleure, les ambiguïtés entre objets se réduisant aux objets appartenant à des fonds communs.

Plus précisément, l'invention a pour objet un procédé d'élaboration d'une base de connaissances d'images d'objets obtenues par un dispositif d'imagerie muni d'un capteur, qui comprend une étape de définition de N classes comportant chacune un ensemble d'objets représentés par une étiquette et un ensemble de caractéristiques, et une étape d'apprentissage de règles de décision associées à ces classes. Il est principalement caractérisé en ce qu'il comprend en outre les étapes suivantes :

- définition de K informations contextuelles de fond

d'image $f_k$, avec k variant de 1 à K et K>1,
- association d'une de ces informations de fond d'image $f_k$ à chaque objet,
- répartition des objets dans M nouvelles classes, avec N<M≤KxN, comportant chacune un ensemble d'objets représentés par une nouvelle étiquette incluant une ancienne étiquette et une desdites informations de fond d'image $f_k$ et l'ensemble des caractéristiques de ces objets,
- définition pour chaque fond $f_k$ d'un sous-ensemble $Q_k$ de ces M classes associées à ce fond d'image,
- apprentissage de règles de décision pour chacun de ces sous-ensembles $Q_k$.

Selon une caractéristique de l'invention, les fonds d'image étant des fonds déterminés sans ambiguïté, les informations de fond d'image $f_k$ concernent en outre des informations de zones frontières entre deux desdits fonds déterminés sans ambiguïté, la largeur de ces zones frontières étant déterminée en fonction d'erreurs prédéterminées sur le MNT et/ou la position du capteur et/ou son attitude.

Un opérateur va décider de segmenter le problème en plusieurs sous-problèmes se rapportant à différents fonds (par ex : terre/mer). Néanmoins le calcul de l'information d'appartenance à tel ou tel type de fond (appartenance binaire ou probabiliste) est soit fixé par un opérateur soit encore calculé automatiquement en utilisant le MNT.

L'invention a aussi pour objet un procédé de classification d'un objet présent dans une image obtenue par un système de veille par imagerie, qui comprend une étape d'extraction de l'objet à classifier dans l'image, caractérisé en ce qu'il comporte une étape de classification de l'objet à partir d'une base de connaissances telle que décrite précédemment, qui comprend les sous-étapes suivantes :

- acquisition par des moyens de positionnement du système, de la position géographique du capteur du dispositif d'imagerie lors de l'acquisition de l'image,
- alimentation du système de veille par un Modèle Numérique de Terrain et extraction dans le MNT d'une région d'intérêt associée cette position,
- estimation de l'attitude du capteur du dispositif d'imagerie lors de l'acquisition de l'image, par des moyens de mesure d'attitude, ces mesures étant avantageusement filtrées,
- détermination des élévations du terrain sur un domaine compatible du champ de vision du dispositif d'imagerie, en fonction de ladite attitude et de ladite région d'intérêt,
- projection dans le champ de vision du capteur des informations contextuelles de fond pour segmenter le champ de vision,
- détermination du fond $f_k$ associé à l'objet à classifier,
- application de règles de décision du sous-ensemble associé à ce fond, ces règles étant issues du procédé d'élaboration d'une base de connaissances tel que décrit précédemment.

Lorsque le MNT ne fournit pas d'informations d'élévation de terrain pour certaines positions du capteur (dans des zones couvertes d'eau par exemple), l'étape d'extraction dans le MNT d'une région d'intérêt comprend une étape préalable pour compléter ledit MNT par des informations d'élévation de terrain associées à ces positions (altitudes nulles ou valeurs minimales ou moyennes des zones adjacentes).

Enfin l'invention concerne un système de veille par imagerie qui comprend un dispositif d'imagerie muni d'un capteur, des moyens de positionnement du dispositif d'imagerie, des moyens de stockage sur lesquels sont stockés des fichiers d'un Modèle Numérique du Terrain et une unité de traitement qui comporte des moyens de mise en oeuvre du procédé de classification tel que décrit précédemment.

La solution proposée permet d'améliorer les performances du système en réduisant la complexité de la tâche de discrimination des différents types de cibles et en permettant une adaptation du processus de classification à l'environnement géographique courant du système.

De plus, l'interprétation d'éventuels problèmes ou erreurs de classification, et en conséquence la recherche de solutions à ces problèmes, est facilitée par la réduction de périmètre du problème : l'analyse se fait pour un type de fond uniquement.

Enfin, l'avantage de la méthode est de permettre un gain en temps de calcul. En effet, par rapport à une approche globale (c'est-à-dire une approche utilisant une base d'apprentissage regroupant tous les types d'objets et une caractérisation par un nombre important d'attributs), la taille de la base d'apprentissage et le nombre de caractéristiques nécessaires à la prise de décision sont réduits.

D'autres caractéristiques et avantages de l'invention apparaîtront à la lecture de la description détaillée qui suit, faite à titre d'exemple non limitatif et en référence aux dessins annexés dans lesquels :

la figure 1 représente schématiquement un exemple de trois classes parfaitement réparties dans un espace à deux dimensions,
la figure 2 illustre schématiquement un exemple selon l'invention de répartition de trois classes d'origine (N=3) en six nouvelles classes (M=6) obtenues en répartissant les objets de chacune des trois classes d'origine selon un fond de ciel et un fond de mer,
les figures 3a et 3b représentent schématiquement des exemples d'élévation de terrain (fig 3a) et de carte d'intervisibilité (fig 3b),
la figure 4 représente schématiquement un exemple de système de veille par imagerie équipé de moyens de classification selon l'invention.

D'une figure à l'autre, les mêmes éléments sont repérés par les mêmes références.

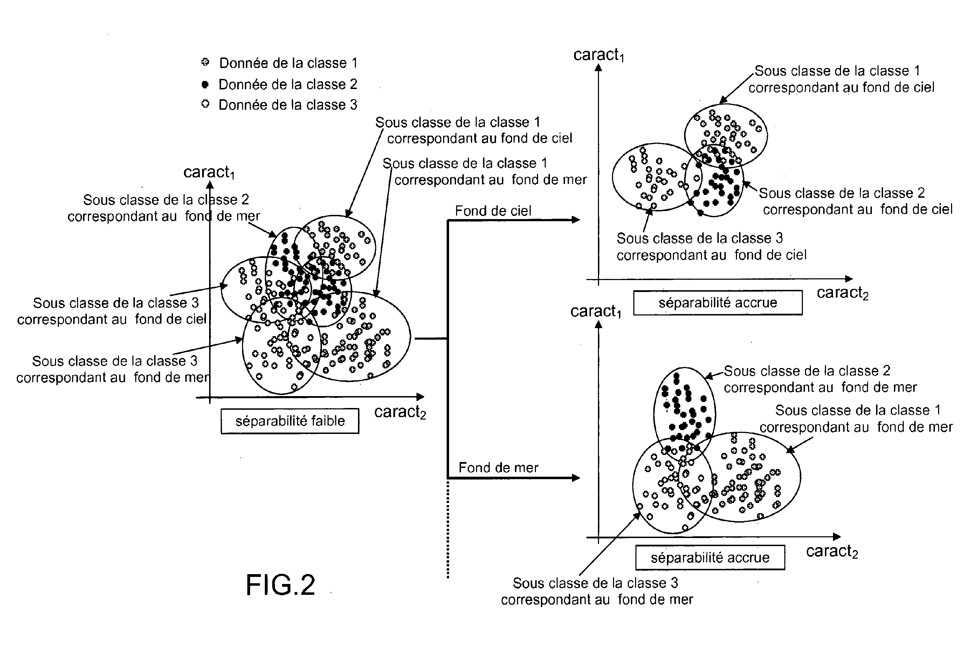

On va décrire le procédé selon l'invention en relation avec l'exemple de la figure 2.

On définit N classes (dans l'exemple N=3) comportant chacune un ensemble d'objets de référence représentés par une étiquette (classe1, classe2 et classe3). Ces classes présentent typiquement une faible séparabilité. A ces classes sont associées un ensemble de caractéristiques (dans l'exemple caract1, caract2), et de règles de décision associées à ces caractéristiques.

L'étape suivante consiste à définir K (K>1) caractéristiques contextuelles, en l'occurrence des caractéristiques de fond d'image $f_k$, avec k variant de 1 à K ; dans l'exemple de la figure il s'agit d'un fond de mer $f_1$, et d'un fond de ciel $f_2$ (K=2).

Une caractéristique de contexte $f_k$ est alors associée à chaque objet de chacune des N classes ; ceci est effectué soit par un opérateur, soit calculé automatiquement en utilisant le MNT. Un objet bateau est par exemple associé au fond de mer mais n'est pas associé au fond de ciel et réciproquement un avion est associé au fond de ciel mais n'est pas associé au fond de mer. Plusieurs caractéristiques de contexte $f_k$ peuvent être associées à un même objet. De par son mouvement erratique, un oiseau est susceptible de passer successivement sur un court laps de temps d'un type de fond de mer à un type de fond de ciel, ce qui n'est pas le cas d'un avion.

On peut aussi définir comme informations de fond $f_k$, des informations de zones frontières entre deux fonds déterminés sans ambiguïté, la largeur de ces zones frontières étant déterminée en fonction d'erreurs prédéterminées sur le MNT et/ou la position du capteur et/ou son attitude.

A partir de ces caractéristiques $f_k$ et des N classes d'origine, M nouvelles classes sont alors définies avec N < M ≤ K x N. Chaque classe d'origine est ainsi scindée en sous-classes sur la base de l'information contextuelle de fond $f_k$. Il y a au plus K sous-classes pour chaque classe d'origine. On peut avoir M=KxN comme sur la figure où les objets des trois classes d'origine sont répartis en 6 (on a M = K x N =2 x 3) nouvelles classes : trois nouvelles classes pour le fond de ciel et trois nouvelles classes pour le fond de mer. Mais on peut aussi avoir M< K x N lorsqu'aucun des objets d'une des N classes d'origine n'est associé à une ou plusieurs des caractéristiques de contexte.

Cette répartition peut être réalisée par un opérateur ou par apprentissage automatique ou éventuellement les deux.

Sont ainsi définies M (dans notre exemple M=6 avec K=2 et N=3) nouvelles classes dans lesquelles les objets des trois classes d'origine sont répartis en fonction des anciennes caractéristiques et des nouvelles caractéristiques de contexte. Chaque nouvelle classe est représentée par une nouvelle étiquette incluant une ancienne étiquette et une desdites informations de fond d'image et l'ensemble des caractéristiques de ces objets.

Pour chaque fond $f_k$ est défini un sous-ensemble $Q_k$ de ces M-classes associées à ce fond d'image. Dans notre exemple, deux sous-ensembles $Q_1$ et $Q_2$ de 3 classes sont définis, l'un pour le fond de mer $f_1$, l'autre pour le fond de ciel $f_2$. Un sous-ensemble $Q_k$ peut être vide lorsque par exemple, aucun objet d'une classe d'origine n'est associé au fond d'image $f_k$ : aucun objet bateau n'est associé au fond de ciel par exemple.

Des règles de décision sont établies de manière classique pour chacun de ces sous-ensembles $Q_k$.

Une nouvelle base de connaissances est ainsi définie.

Cette solution permet d'améliorer les performances du système de classification en réduisant la complexité de la tâche de discrimination des différents types de cibles et en permettant une adaptation du processus de classification à l'environnement géographique courant du système.

De plus, l'interprétation d'éventuels problèmes ou erreurs de classification, et en conséquence la recherche de solutions à ces problèmes, est facilitée par la réduction de périmètre du problème : l'analyse se fait pour un type de fond uniquement.

Enfin, l'avantage du procédé est de permettre un gain en temps de calcul. En effet, par rapport à une approche globale (c'est-à-dire une approche utilisant une base d'apprentissage regroupant tous les types d'objets et une caractérisation par un nombre important d'attributs), la taille de la base d'apprentissage et le nombre de caractéristiques nécessaires à la prise de décision sont réduits.

A cette nouvelle base d'apprentissage de M classes, correspond un nouveau procédé de classification d'un nouvel objet.

Il comprend notamment une étape consistant à associer une information de fond $f_k$ au nouvel objet. Un objet peut appartenir de manière sûre à un seul type de fond ou bien peut se situer dans une zone frontière ambigüe. Pour prendre en considération ces zones ambigües, on peut soit choisir de définir les zones frontières tels que « ligne de crête » et « ligne d'horizon » comme nouvelles informations de fond $f_k$ et associer l'objet à une seule information de fond. Selon une alternative, on peut ne pas compléter ces informations de fond par ces zones frontières et associer l'objet simultanément à deux informations de fond $f_k$.

Ainsi par exemple la cinématique des deux objets :

- avion, bateau peut être très proche de même que leurs intensités d'où un risque de confusion ; mais si l'objet à classifier n'est pas trop proche de l'horizon, il sera associé à une caractéristique de fond « ciel » ou « mer », et aiguillé vers des classes dans lesquelles il n'y a pas d'ambiguïté avion/bateau : dans les classes « ciel », les avions ne peuvent être confondus avec des bateaux et inversement dans les classes « mer », les bateaux ne peuvent être confondus avec des avions ;

- avion, crête de vague peut être très proche de même que leurs intensités d'où un risque de confusion ; dans les classes « ciel », les avions ne peuvent être confondus avec des crêtes de vague et inversement dans les classes « mer », les vagues ne peuvent être confondues avec des avions ;

- bateau, bord de nuages peut être très proche de même que leurs intensités d'où un risque de confusion ; dans les classes « ciel », les bords de nuage ne peuvent être confondus avec des bateaux et inversement dans les classes « mer », les bateaux ne peuvent être confondus avec des bords de nuage.

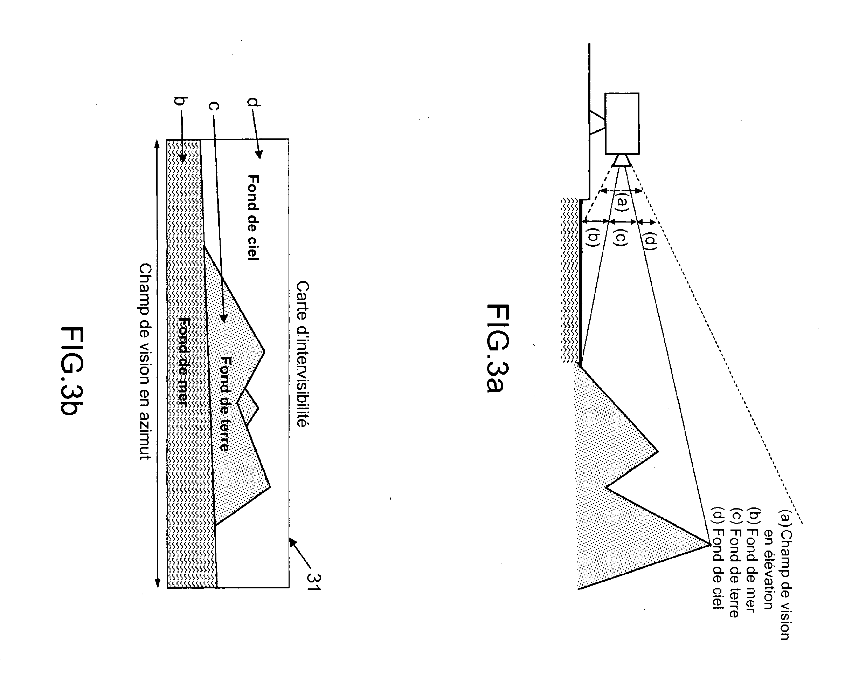

L'information de fond $f_k$ associée au nouvel objet est calculée à partir de la position géographique et de l'attitude du dispositif d'imagerie du système de veille et grâce à l'utilisation d'un Modèle Numérique du Terrain (MNT). Pour une zone d'intérêt centrée sur la position et la direction de la ligne de visée du dispositif d'imagerie, on détermine dans un premier temps les élévations du terrain comme illustré figure 3a. Les élévations du terrain peuvent sortir du champ de vision du capteur et même du champ dans lequel l'information est calculée - elle même supérieure (du moins en site) à l'extension du capteur. Puis on projette dans le champ de vision du dispositif d'imagerie, les informations contextuelles de fond préalablement assemblées dans des cartes d'intervisibilité 31 sur lesquelles sont représentées les lignes de côte et lignes de crête comme illustré figure 3b, ce qui permet de segmenter le champ de vision comme spécifié ci-dessus, c'est-à-dire en fonction des informations contextuelles de fond.

Par le biais de cette nouvelle caractéristique $f_k$, l'objectif est de positionner un objet sur un type de fond particulier et de lui appliquer les règles de décision adaptées définies lors de l'élaboration de la nouvelle base de connaissances.

La classification d'un nouvel objet est généralement différée de l'élaboration de la base de connaissances. Dans le cas par exemple d'un système de veille embarqué à bord d'un aéronef, la base de connaissances est élaborée à terre, le procédé de classification étant mis en oeuvre en vol. La base de connaissances est produite à terre avant la mission et la prise de décision est mise en oeuvre au cours de la mission.

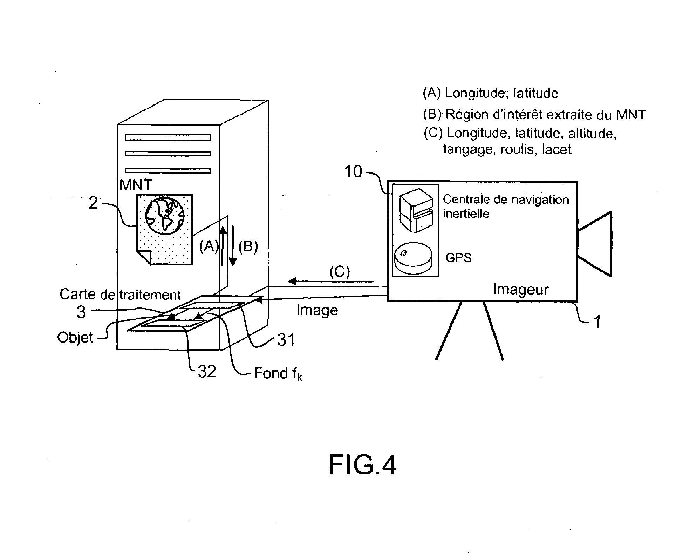

Le système de veille par imagerie 100 décrit en relation avec la figure 4, qui est équipé d'un dispositif de classification (ou classifieur), comprend :

- Des moyens de positionnement 10 tels qu'une centrale de navigation inertielle (CNI) et un GPS, solidaires du dispositif d'imagerie 1 (éventuellement d'imagerie passive) servant à la détermination des orientations angulaires des objets extraits des images et au positionnement du capteur d'après ses coordonnées géodésiques. Il convient avantageusement de connaître les erreurs sur ces informations afin de pouvoir pondérer la confiance sur les résultats d'appartenance à produire.

- Un Modèle Numérique du Terrain 2 incluant la zone géographique couverte par le système de veille. Si le système est appelé à être embarqué sur un porteur en mouvement, il convient de disposer sur disque dur de MNT de toutes les zones dans lequel le système doit fonctionner.

- Une unité de traitement 3 intégrant un micro-processeur et embarquant un logiciel chargé de traiter les données du MNT et de la centrale inertielle pour positionner les différents objets à classifier sur les différents types de fonds et ainsi mettre en oeuvre le procédé de classification d'un nouvel objet qui va être décrit plus loin. Certaines parties du traitement peuvent éventuellement être implantées sur FPGA.

La méthode est adaptable à la précision de mesure des capteurs inertiels et du niveau de précision du Modèle Numérique de Terrain. Le principe n'est pas remis en cause par une évolution de ces derniers, une augmentation de précision de ces éléments permet, après simple re-paramétrage, de gagner en précision de segmentation du champ de vision.

Le fonctionnement du procédé de classification d'un nouvel objet est le suivant :

1. La centrale inertielle 10 mesure les données inertielles suivantes C au niveau du dispositif d'imagerie 1 et les transfère à l'unité de traitement 3 : longitude, latitude, altitude, tangage, roulis et lacet. Si elles ne sont pas connues a priori et fixées dans l'unité de traitement, la centrale inertielle peut également fournir les valeurs des incertitudes sur les précédentes mesures.

2. L'unité de traitement 3 reçoit les données inertielles C, extrait la longitude et la latitude A ; selon une variante, l'unité de traitement reçoit directement une position géographique A des moyens de positionnement 10 tels qu'un GPS. A partir de cette position A, une zone d'intérêt B (zone géographique centrée sur le système) est déterminée et les données d'altitude correspondant à la zone d'intérêt B sont alors extraites des fichiers du Module Numérique de Terrain 2, stockés dans les moyens de stockage (disque dur typiquement). De préférence, lorsqu'il n'y a pas de données d'altitude pour certaines zones d'intérêt B, telles que des zones couvertes d'eau, l'unité de traitement 3 détermine artificiellement pour ces zones, des données d'altitude par des 0 ou par les valeurs minimales ou moyennes des zones adjacentes.

3. L'unité de traitement 3 extrait la donnée d'altitude du capteur des données inertielles C et l'utilise conjointement à la zone d'intérêt B pour construire, par projection, une carte d'intervisibilité 31 (pour chaque direction observée, cette carte fournit le type de fond visible) pour tout le champ de vision. Cette carte d'intervisibilité 31 est illustrée figure 3b.

4. L'unité de traitement 3 extrait les données roulis, tangage et lacet des données inertielles C et les utilise conjointement à l'altitude du capteur pour référencer les objets dans le même repère angulaire que la carte d'intervisibilité 31.

5. L'unité de traitement 3 en déduit le type de fond $f_k$ auquel appartient l'objet en cours de classification et, en fonction de cette dernière information, lui applique les règles de décision du classifieur 32 s'appliquant sur ce type de fond et définies lors de l'élaboration de la nouvelle base de connaissances.

La fréquence des opérations 1,2,3, d'une part, et des opérations 4,5, d'autre part, peut différer suivant les besoins de l'application (porteurs en mouvement, fréquences des demandes de classification, etc.). Un besoin typique est une faible fréquence temporelle pour les opérations 1,2,3 (suffisant lorsque le mouvement porteur est lent) et une haute fréquence temporelle pour les opérations 4,5 (le nombre d'objets à classifier est généralement grand et les temps de prise de décision doivent être courts).

## Revendications

1. Procédé de classification d'un objet présent dans une image obtenue par un système de veille (100) par imagerie comportant un capteur, qui comprend une étape d'extraction de l'objet à classifier dans l'image, **caractérisé en ce qu'**il comporte une étape de classification de l'objet à partir d'une base de connaissances

   - ladite base de connaissances comportant plusieurs classes comportant chacune un ensemble d'objets représentés par une étiquette et un ensemble de caractéristiques dont des informations contextuelles de fond d'images, issues d'un traitement alimenté par un Modèle Numérique du Terrain (2), dit MNT, et
   - comprenant des règles de décision associées à ces fonds d'images,

   cette étape de classification comprenant les sous-étapes suivantes :

   - acquisition par des moyens de positionnement (10) du système, de la position géographique du capteur du dispositif d'imagerie (1) lors de l'acquisition de l'image,
   - alimentation du système de veille par le MNT, extraction dans le MNT d'une région d'intérêt associée cette position,
   - estimation de l'attitude du capteur du dispositif d'imagerie lors de l'acquisition de l'image, par des moyens de mesure d'attitude,

- détermination des élévations du terrain sur un domaine compatible du champ de vision du dispositif d'imagerie, en fonction de ladite attitude et de ladite région d'intérêt,
- projection dans le champ de vision d'une segmentation du champ de vision à partir des élévations du terrain,
- à partir de cette segmentation du champ de vision et de la position de l'objet dans ce champ de vision, détermination du fond d'images associé à l'objet à classifier,
- application des règles de décision (32) associées à ce fond.

**2.** Procédé de classification d'un objet selon la revendication précédente, **caractérisé en ce que** les mesures d'attitude sont filtrées.

**3.** Procédé de classification d'un objet selon l'une des revendications précédentes, **caractérisé en ce que** le MNT ne fournissant pas d'informations pour certaines positions du capteur, l'étape d'extraction dans le MNT d'une région d'intérêt comprend une étape préalable pour compléter ledit MNT par des altitudes nulles ou des valeurs minimales ou moyennes de zones adjacentes associées à ces positions.

**4.** Procédé de classification d'un objet selon l'une des revendications précédentes, **caractérisé en ce que** des informations de fonds correspondent à des zones frontières déterminées en fonction d'erreurs prédéterminées sur le MNT et/ou la position du capteur et/ou son attitude.

**5.** Système de veille (100) par imagerie qui comprend un dispositif d'imagerie (1) muni d'un capteur, des moyens de positionnement (10) du dispositif d'imagerie, des moyens de stockage dans lesquels sont stockés des fichiers d'un Modèle Numérique du Terrain (2) et une unité de traitement (3) qui comporte des moyens (31, 32) de mise en oeuvre du procédé de classification selon les revendications précédentes.

**Patentansprüche**

**1.** Klassifizierungsverfahren eines in einem Bild vorhandenen Objekts, das durch ein Bildbeobachtungssystem (100) erzeugt wurde, das einen Sensor aufweist, das einen Schritt der Extraktion des in dem Bild zu klassifizierenden Objekts umfasst, **dadurch gekennzeichnet, dass** es einen Klassifizierungsschritt des Objekts ausgehend von einer Wissensdatenbank aufweist, wobei die Wissensdatenbank mehrere Klassen aufweist, die jeweils eine Gruppe von Objekten aufweisen, die durch ein Etikett repräsentiert sind, und eine Gruppe von Merkmalen, darunter Bildhintergrund-Kontextinformationen im Ergebnis einer durch ein Digitales Geländemodell (2), als MNT bezeichnet, gespeisten Verarbeitung, und die diesen Bildhintergründen zugeordnete Entscheidungsregeln umfasst, wobei dieser Klassifizierungsschritt die folgenden Unterschritte umfasst:

Erfassen, durch Positionierungsmittel (10) des Systems, der geographischen Position des Sensors der Bildaufnahmevorrichtung (1) beim Erfassen des Bildes,
Versorgen des Beobachtungssystems durch das MNT, Extraktion aus dem MNT einer dieser Position zugeordneten Interessensregion,
Ermitteln der Stellung des Sensors der Bildaufnahmevorrichtung beim Erfassen des Bildes durch Stellungsmessmittel,
Bestimmen der Geländeerhebungen in einem Bereich, der mit dem Sichtfeld der Bildaufnahmevorrichtung kompatibel ist, in Abhängigkeit von der Stellung und von der Interessensregion,
Projizieren in das Sichtfeld einer Segmentierung des Sichtfelds ausgehend von den Geländeerhebungen,
ausgehend von dieser Segmentierung des Sichtfelds und von der Position des Objekts in diesen Sichtfeld, Bestimmen des dem zu klassifizierenden Objekt zugeordneten Bildhintergrunds,
Anwenden der diesem Hintergrund zugeordneten Entscheidungsregeln (32).

**2.** Klassifizierungsverfahren eines Objekts nach vorangehendem Anspruch, **dadurch gekennzeichnet, dass** die Stellungsmessungen gefiltert sind.

**3.** Klassifizierungsverfahren eines Objekts nach einem der vorangehenden Ansprüche, **dadurch gekennzeichnet, dass**, da das MNT für bestimmte Positionen des Sensors keine Informationen liefert, der Schritt der Extraktion aus dem MNT einer Interessensregion einen vorherigen Schritt umfasst, um das MNT mit Null-Höhen oder minimalen oder mittleren Werten benachbarter Zonen, die diesen Positionen zugeordnet sind, zu komplettieren.

**4.** Klassifizierungsverfahren eines Objekts nach einem der vorangehenden Ansprüche, **dadurch gekennzeichnet, dass** Hintergrundinformationen mit Grenzzonen übereinstimmen, die in Abhängigkeit von im MNT vorher bestimmten Fehlern und/oder der Position des Sensors und/oder seiner Stellung bestimmt sind.

**5.** Bildbeobachtungssystem (100), das eine mit einem Sensor ausgestattete Bildaufnahmevorrichtung (1), Positionierungsmittel (10) der Bildaufnahmevorrichtung, Speichermittel, in denen Dateien eines Digitalen Geländemodells (2) gespeichert sind, und eine Verarbeitungseinheit (3), die Mittel (31, 32) zur Durchführung des Klassifizierungsverfahrens nach einem der vorangehenden Ansprüche aufweist, umfasst.

**Claims**

1. Classification method for an object present in an image obtained by an imaging monitoring system (100) comprising a sensor, which comprises a step of extracting the object to be classified in the image, **characterised in that** it comprises a classification step for the object from a knowledge base,
   the knowledge base comprising a plurality of classes each comprising a set of objects which are represented by a label and a set of characteristics, including contextual image background information which is from a processing operation supplied by a Digital Terrain Model (2), referred to as DTM, and comprising decision-making rules associated with those image backgrounds,
   that classification step comprising the following substeps:

   acquiring, by positioning means (10) of the system, the geographical position of the sensor of the imaging device (1) when the image is acquired,
   supplying the monitoring system by the DTM, extracting from the DTM a region of interest associated with that position,
   estimating the attitude of the sensor of the imaging device when the image is acquired, using attitude measuring means,
   establishing the elevations of the terrain over a compatible range of the field of vision of the imaging device in accordance with the attitude and the region of interest,
   projecting, into the field of vision, a segmentation of the field of vision on the basis of the elevations of the terrain,
   on the basis of that segmentation of the field of vision and the position of the object **in that** field of vision, establishing the image background associated with the object to be classified,
   applying decision-making rules (32) associated with that background.

2. Classification method for an object according to the preceding claim, **characterised in that** the attitude measurements are filtered.

3. Classification method for an object according to either of the preceding claims, **characterised in that**, the DTM not providing any information for some positions of the sensor, the step of extraction from the DTM of a region of interest comprises a preceding step in order to supplement the DTM with zero altitudes or minimum or mean values of adjacent zones associated with those positions.

4. Classification method for an object according to any one of the preceding claims, **characterised in that** pieces of background information correspond to boundary zones which are determined in accordance with predetermined errors on the DTM and/or the position of the sensor and/or the attitude thereof.

5. Imaging monitoring system (100) which comprises an imaging device (1) which is provided with a sensor, positioning means (10) of the imaging device, storage means, in which there are stored files of a Digital Terrain Model (2), and a processing unit (3) which comprises means (31, 32) for carrying out the classification method according to the preceding claims.

FIG.1

⊕ Donnée de la classe 1
● Donnée de la classe 2
○ Donnée de la classe 3

$caract_1$

Sous classe de la classe 1
correspondant au fond de ciel

Sous classe de la classe 1
correspondant au fond de mer

Sous classe de la classe 2
correspondant au fond de mer

Sous classe de la classe 3
correspondant au fond de ciel

Sous classe de la classe 3
correspondant au fond de mer

séparabilité faible          $caract_2$

Fond de ciel

$caract_1$

Sous classe de la classe 1
correspondant au fond de ciel

Sous classe de la classe 2
correspondant au fond de ciel

Sous classe de la classe 3
correspondant au fond de ciel

séparabilité accrue          $caract_2$

$caract_1$

Fond de mer

Sous classe de la classe 2
correspondant au fond de mer

Sous classe de la classe 1
correspondant au fond de mer

séparabilité accrue          $caract_2$

Sous classe de la classe 3
correspondant au fond de mer

FIG.2

EP 2 517 152 B1

(a) Champ de vision
en élévation
(b) Fond de mer
(c) Fond de terre
(d) Fond de ciel

(d)

(a) (c)

(b)

## FIG.3a

Carte d'intervisibilité

31

d — Fond de ciel

c — Fond de terre

b — Fond de mer

Champ de vision en azimut

## FIG.3b

(A) Longitude, latitude
(B) Région d'intérêt extraite du MNT
(C) Longitude, latitude, altitude, tangage, roulis, lacet

MNT

2

(A) (B)

Carte de traitement
3

Objet

32    Fond $f_k$

31

Image

10

Centrale de navigation inertielle

GPS

Imageur

1

**FIG.4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Toward Category-Level Object Recognition. Springer-Verlag, Lecture Notes in Computer Science, vol. 4170
- **DUDA, R. ; HART, P. ; STORK, D.** Pattern Classification. Wiley-interscience, 2000
- Classification by pairwise coupling. **HASTIE, T. ; TIBSHIRANI, R.** Conf. on Advances in neural information processing systems. The MIT Press, 1997, vol. 10, 507-513
- **VIOLA ; JONES.** Rapid object detection using a boosted cascade of simple features. *IEEE Computer Society Conference on Computer Vision and Pattern Recognition,* 2001